Europäisches Patentamt

**European Patent Office**

Office européen des brevets

(11) Veröffentlichungsnummer: **0 083 016**
**A1**

# (12) EUROPÄISCHE PATENTANMELDUNG

(21) Anmeldenummer: 82111533.4

(22) Anmeldetag: 13.12.82

(51) Int. Cl.³: **C 09 D 3/64**
**C 08 G 63/12**

(30) Priorität: 24.12.81 DE 3151366

(43) Veröffentlichungstag der Anmeldung:
06.07.83 Patentblatt 83/27

(84) Benannte Vertragsstaaten:
AT CH DE FR GB IT LI NL SE

(71) Anmelder: BAYER AG
Zentralbereich Patente, Marken und Lizenzen
D-5090 Leverkusen 1, Bayerwerk(DE)

(72) Erfinder: Dhein, Rolf, Dr.
Deswatinesstrasse 30
D-4150 Krefeld 1(DE)

(72) Erfinder: Bäcker, Lothar
Nievenheimer Strasse 26
D-4047 Dormagen 5(DE)

(72) Erfinder: Schoeps, Jochen, Dr.
Windmühlenstrasse 126
D-4150 Krefeld 1(DE)

(54) **Bindemittel für wässrige Einbrennlacke auf Basis von Polyestern und Verfahren zu ihrer Herstellung.**

(57) Durch Zusatz von Umsetzungsprodukten 4- bis 6-wertiger Alkohole und Dicarbonsäureanhydride gelingt es, ursprünglich wasserunlösliche Polyester wasserverdünnbar zu machen. Einbrennlacke auf Basis derartiger Systeme führen zu äußerst wetterfesten Lackierungen.

EP 0 083 016 A1

BAYER AKTIENGESELLSCHAFT     5090 Leverkusen, Bayerwerk
Zentralbereich
Patente, Marken und Lizenzen   Pv/bo/c

Bindemittel für wäßrige Einbrennlacke auf Basis von Polyestern und Verfahren zu ihrer Herstellung

Die Erfindung betrifft Bindemittel für wäßrige Einbrennlacke aus Polyestern, Hydroxylverbindungen und gegebenenfalls Aminoplastharzen sowie ein Verfahren zu ihrer Herstellung.

Reaktivverdünner sind niedrigviskose Stoffe, die harzartige Bindemittel verdünnen und dadurch dem Lack die zu
seiner Applikation notwendige Viskosität verleihen, zur
Mischpolymerisation oder Mischkondensation mit dem Lackharz befähigte funktionelle Gruppen enthalten und beim
Härtungsvorgang zum überwiegenden Teil - jeweils in Abhängigkeit von ihrer Flüchtigkeit - Bestandteil des gehärteten Lackfilms werden.

Polyester-Einbrennlacke, die Reaktivverdünner enthalten,
sind bekannt (DE-OS 22 53 300, 24 33 489, 24 39 548,
25 05 246). Sofern es sich dabei um wäßrige Lacke handelt, werden die Polyester mit Dicarbonsäureanhydriden
zu deren Halbestern umgesetzt, wobei die freien Carboxylgruppen nach erfolgter Neutralisation dem Polyester die

Le A 21 315 - Ausland

gewünschte Wasserverdünnbarkeit verleihen. Wenn keine trübe Dispersion, sondern ein klarer Lack entstehen soll, ist die Mitverwendung mit Wasser mischbarer organischer Hilfslösungsmittel dennoch ratsam, weil erst damit die sichere Vermeidung von Trübungen gewährleistet ist.

Andererseits besteht bei der Verwendung von z.B. Polyolen, wie Glycerin, als Reaktivverdünner die Gefahr, daß sich durch einen Anstieg der Zahl freier Hydroxylgruppen des Bindemittels eine gesteigerte Hydrophilie des gehärteten Lackfilms entwickelt, die eine unerwünschte Qualitätsverschlechterung der Lackschichten, z.B. geringerer Glanz oder schlechtere Wetterfestigkeit, bewirken kann. Zwar ist eine derartige Erscheinung durch Erhöhung des Anteils der Vernetzungsmittel zu kompensieren, doch muß man dann in der Regel eine Verringerung der Filmelastizität in Kauf nehmen.

Überraschenderweise wurde nun gefunden, daß die Verwendung von gegebenenfalls neutralisierten Umsetzungsprodukten von Dicarbonsäureanhydriden und 4- bis 6-wertigen Alkoholen in Abwesenheit inerter organischer Lösungsmittel mit an sich wasserunlöslichen Polyestern zu trübungsfreien wäßrigen Lacken führt; unabhängig von der Wasserlöslichkeit bzw. -unlöslichkeit der eingesetzten Polyester verleihen die erfindungsgemäß zu verwendenden Umsetzungsprodukte den Einbrennlackierungen außergewöhnlich hohe Wetterfestigkeit und guten Glanz.

Gegenstand der Erfindung sind also wäßrige Einbrennlacke auf Basis von

Le A 21 315

A) 40 bis 90, vorzugsweise 60 bis 80, Gewichtsteilen Polyester mit einer Säurezahl von 1 bis 100, vorzugsweise von 5 bis 50, insbesondere von 5 bis 20, einer Hydroxylzahl von 40 bis 400 und einem mittleren Molekulargewicht von 1500 bis 10 000,

B) 10 bis 60, vorzugsweise 20 bis 40, Gewichtsteilen Hydroxylverbindung mit einem mittleren Molekulargewicht unter 1000 und

C) 10 bis 40 Gewichtsteilen Aminoplastharz,

dadurch gekennzeichnet, daß die Hydroxylverbindung B ein Umsetzungsprodukt aus mindestens einem Dicarbonsäureanhydrid und mindestens einem 4- bis 6-wertigen Alkohol ist, wobei das Umsetzungsprodukt pro Polyolrest 1,0 bis 1,3, vorzugsweise 1,0 bis 1,1, Mol Dicarbonsäurereste enthält.

Die Vereinigung des Polyesters A und der Hydroxylverbindung B erfolgt bei erhöhter Temperatur unter Rühren. Wenn man das Rühren über längere Zeit fortsetzt, wird ein starker Viskositätsabfall beobachtet, der mit einer steigenden Wasserlöslichkeit der Kombination Polyester A/ Hydroxylverbindung B einhergeht. Sobald die Viskosität nicht weiter abnimmt, ist das Maximum der Wasserlöslichkeit erreicht.

Weiterer Gegenstand der Erfindung ist also ein Verfahren zur Herstellung von Einbrennlacken aus

Le A 21 315

A)  40 bis 90, vorzugsweise 60 bis 80, Gewichtsteilen
Polyester mit einer Säurezahl von 1 bis 100, vorzugsweise von 5 bis 50, insbesondere von 5 bis 20,
einer Hydroxylzahl von 40 bis 400 und einem mittleren Molekulargewicht von 1500 bis 10 000,

B)  10 bis 60, vorzugsweise 20 bis 40, Gewichtsteilen
Hydroxylverbindung mit einem mittleren Molekulargewicht unter 1000 und

C)  10 bis 40 Gewichtsteilen Aminoplastharz,

dadurch gekennzeichnet, daß die Hydroxylverbindung B ein
Umsetzungsprodukt aus mindestens einem Dicarbonsäureanhydrid und mindestens einem 4- bis 6-wertigen Alkohol
ist, wobei das Umsetzungsprodukt pro Polyolrest 1,0 bis
1,3, vorzugsweise 1,0 bis 1,1, Mol Dicarbonsäurereste
enthält und daß man den Polyester A mit der Hydroxylverbindung B bei einer Temperatur von 110 bis 150, vorzugsweise von 120 bis 140°C, vereinigt und so lange rührt,
bis die gewünschte Viskosität erreicht ist, anschließend
neutralisiert und das Aminoplastharz C zusetzt.

Man kann die Hydroxylverbindung B aus Dicarbonsäureanhydrid und Polyol ohne Nachteil auch in Gegenwart des
Polyesters A herstellen.

Unter Polyestern A versteht man durch Polykondensation
nach bekannten Verfahren aus Alkoholen und Carbonsäuren
hergestellte ölfreie ebenso wie Fettsäure-modifizierte

Le A 21 315

- 5 -

Polykondensate der Art, wie sie z.B. im Römpp's Chemielexikon, Bd. 1, S. 202, Frankh'sche Verlagsbuchhandlung, Stuttgart, 1966 definiert oder bei D.H. Solomon, The Chemistry of Organic Filmformers, S. 75 - 101, John Wiley & Sons Inc., New York, 1967, beschrieben sind.

Für die Synthese der Polyester A bevorzugte Alkohole sind aliphatische, cycloaliphatische und/oder araliphatische Alkohole mit 1 - 6, vorzugsweise 1 - 4, an nichtaromatische C-Atome gebundenen OH-Gruppen und 1 - 24 C-Atomen pro Molekül, z.B. Glykole wie Ethylenglykol, Propylenglykol, Butandiole, Neopentylglykol, Hexandiole; Etheralkohole wie Di- und Triethylenglykole sowie Dianhydrosorbit und -mannit; oxethylierte Bisphenole; per-hydrierte Bisphenole; ferner Trimethylolethan, Trime-thylolpropan, Glycerin, Pentaerythrit, Dipentaerythrit, Mannit und Sorbit; einwertige, kettenabbrechende Alkohole wie Propanol, Butanol, Cyclohexanol und Benzylalkohol.

Für die Synthese der Polyester A bevorzugte Säurekom-ponenten sind aliphatische, cycloaliphatische, gesät-tigte oder ungesättigten und/oder aromatische mehrbasische Carbonsäuren, vorzugsweise Di- und Tricarbonsäuren, mit 4 bis 12 C-Atomen pro Molekül oder deren veresterungsfähige Derivate (z.B. Anhydride oder Ester), z.B. Phthalsäureanhydrid, Isophthalsäure, Terephthal-säure, Tetrahydro- und Hexahydrophthalsäureanhydrid, Trimellithsäureanhydrid, Pyromellithsäureanhydrid, Ma-leinsäureanhydrid, Fumarsäure, Adipinsäure, Sebacin-säure, Glutarsäure und Bernsteinsäureanhydrid, Azelain-

Le A 21 315

säure, Endomethylentetrahydrophthalsäure, ferner halogenierte Säuren, wie 3,4,5,6-Tetrachlorphthalsäure und
Hexachlor-endomethylentetrahydrophthalsäure.

Für die Herstellung der Polyester A bevorzugte Monocarbonsäuren sind aliphatische, cycloaliphatische, gesättigte und ungesättigte und/oder aromatische Monocarbonsäuren mit 6 bis 24 C-Atomen pro Molekül wie Benzoesäure,
Butylbenzoesäure, Tolylsäure, Hexahydrobenzoesäure, Abietinsäure, Milchsäure sowie Fettsäuren und Ester derselben wie Leinöl, Sojaöl, Holzöl, Sonnenblumenöl, Saffloröl, Ricinusöl, Ricinenöl, Baumwollsaatöl, Erdnußöl,
Oiticicaöl, Tallölfettsäure, Leinölfettsäure, Sojaöl-,
Holzöl-, Sonnenblumenöl-, Oiticicaöl-, Saffloröl- und
Ricinenölfettsäure und aus natürlichen, ungesättigten
Ölen oder Fettsäuren durch Konjugierung oder Isomerisierung gewonnene Produkte; geeignete gesättigten Fettsäuren sind beispielsweise Cocosölfettsäure und $\alpha$-Ethyl-
hexansäure sowie Isotridecansäure.

Bevorzugte Dicarbonsäureanhydride für die Herstellung
der Hydroxylverbindung B sind Phthalsäureanhydrid, Maleinsäureanhydrid, Bernsteinsäureanhydrid, Tetrahydro-
und Hexahydrophthalsäureanhydrid.

Bevorzugte 4- bis 6-wertige Alkohole für die Herstellung der Hydroxylverbindung B sind Polyole mit 5 bis 10
C-Atomen, wie z.B. Adonit, Arabit, Xylit, Dulcit, Idit,
Dipentaerythrit, insbesondere aber Sorbit, Mannit und
Pentaerythrit.

Le A 21 315

Die mittleren Molekulargewichte der Polyester A und der Hydroxylverbindung B werden osmometrisch in Dimethylformamid bestimmt.

Besonders bevorzugte Hydroxylverbindungen B sind solche, die aus äquimolaren Mengen Dicarbonsäureanhydrid und Polyol hergestellt worden sind. Sie bestehen bis zu 100 % aus dem Dicarbonsäuremonoester des eingesetzten Polyols.

Die Gesamtsäurezahl der Kombination A/B liegt in der Regel bei 40 bis 60.

Als Aminoplastharze C sind vorzugsweise wasserlösliche Melamin-Formaldehyd- oder Harnstoff-Formaldehyd-Kondensationsprodukte anzusehen. Melaminharze sind alle herkömmlichen nicht veretherten oder mit gesättigten Monoalkoholen mit 1 bis 4 C-Atomen veretherten Melamin-Formaldehyd-Kondensate, wie sie z.B. in der FR-PS 943 411 oder bei D.H. Solomon, The Chemistry of Organic Filmformers, 235 - 240, John Wiley & Sons, Inc., New York, 1967, beschrieben sind. Die Melaminharze können jedoch auch ganz oder teilweise durch andere vernetzende Aminoplasten, wie sie z.B. in "Methoden der Organischen Chemie" (Houben-Weyl), Bd. 14/2, Teil 2, 4. Aufl., Georg Thieme Verlag, Stuttgart, 1963, 319 ff. beschrieben sind, ersetzt werden.

Bevorzugte Neutralisationsmittel sind Alkalihydroxide, Ammoniak, primäre, sekundäre und tertiäre Amine, wie z.B. Ethylamin, Di- und Triethylamin, Mono-, Di- und

Le A 21 315

Triethanolamin, Dimethylethanolamin, Methyldiethanolamin, Dimethylaminomethylpropanol.

Die erfindungsgemäßen Einbrennlacke können Pigmente, wie
Titandioxid, Eisenoxid, Chromoxid, Zinksulfid, Ruß, Aluminiumbronze, Füllstoffe, wie Kieselsäure und Lackhilfsmittel, wie Verlaufsmittel, enthalten.

Die Lacke lassen sich nach üblichen Applikationstechniken, z.B. durch Tauchen, Spritzen, Gießen, Streichen,
auftragen.

Der Wassergehalt der spritzfertigen Lacke beträgt vorzugsweise 20 bis 50 Gew.-%, bezogen auf die Summe sämtlicher Lackkomponenten.

Die Härtung kann bei Temperaturen von 80 bis 230°C erfolgen.

Die in den nachfolgenden Beispielen genannten Teile sind
Gewichtsteile.

Le A 21 315

Beispiele

Herstellung eines Polyesters A

551 Teile Propylenglykol, 369,5 Teile Trimethylolpropan, 747,3 Teile Adipinsäure und 506,2 Teile Phthalsäureanhydrid werden bei 230°C unter Inertgasatmosphäre bis zum Erreichen einer Viskosität entsprechend einer Auslaufzeit von 150 sec (gemessen als 60 gew.-%ige Lösung in Dimethylformamid nach DIN 53 211) kondensiert. Die Säurezahl des Polyesters A beträgt ∿10.

Beispiel 1

192,8 Teile Polyester A werden mit 85,8 Teilen einer Mischung äquimolarer Mengen Sorbit und Tetrahydrophthalsäureanhydrid bei 130°C unter Inertgasatmosphäre vereinigt. Innerhalb von 40 Stunden bei 130°C erreicht man eine Viskosität entsprechend einer Auslaufzeit von 50 sec (gemessen als 60 gew.-%ige Lösung in Dimethylformamid nach DIN 53 211). Das entstehende Produkt besitzt eine Gesamtsäurezahl von ∿ 55.

| 25 | Teile des so erhaltene Produkts werden mit |
|---|---|
| 2,26 | Teilen N,N-Dimethylethanolamin, |
| 10,41 | Teilen methyliertem Methylolmelaminharz, 80 gew.-%ig in Isopropanol, |
| 26,67 | Teilen Titandioxid, |
| 0,10 | Teilen Verlaufsmittel und |
| 43,06 | Teilen Wasser |

Le A 21 315

zu einem spritzfähigen Lack mit einem pH-Wert von 7,7,
einer Viskosität entsprechend einer Auslaufzeit von 50
sec (gemessen nach DIN 53 211) und einem Festkörpergehalt (ermittelt durch 1-stündiges Erhitzen auf 120°C)
von 55,8 Gew.-% verarbeitet.

Der Lack wurde aufgespritzt und 30 Minuten bei 120°C
eingebrannt (Trockenfilmdicke 30-35 µm). Die erhaltenen
Lackierungen zeichnen sich durch geringe Kreidung und
hohe Wetterbeständigkeit aus.

Beispiel 2

192,8 Teile Polyester A werden mit 74 Teilen des Umsetzungsprodukts äquimolarer Mengen von Phthalsäureanhydrid und Pentaerythrit bei 130°C unter Inertgasatmosphäre umgesetzt. Innerhalb von 20 Stunden bei 130°C erreicht man eine Viskosität entsprechend einer Auslaufzeit von 50 sec. (gemessen als 60 gew.-%ige Lösung in
Dimethylformamid nach DIN 53 211). Das entstehende Produkt besitzt eine Gesamtsäurezahl von 50.

| 25 | Teile des so erhaltenen Produkts werden mit |
|---|---|
| 1,88 | Teilen N,N-Dimethylethanolamin, |
| 10,41 | Teilen methyliertem Methylolmelaminharz, |
| | 80 gew.-%ig in Isopropanol, |
| 26,67 | Teilen Titandioxid, |
| 0,10 | Teilen Verlaufsmittel und |
| 35,94 | Teilen Wasser |

zu einem Decklack verarbeitet, der zu hochglänzenden
harten Lackierungen führt.

Le A 21 315

Patentansprüche

1.  Wäßrige Einbrennlacke auf Basis von

    A)  40 bis 90 Gewichtsteilen Polyester mit einer
        Säurezahl von 1 bis 100, einer Hydroxylzahl
        von 40 bis 400 und einem mittleren Molekulargewicht von 1500 bis 10 000,

    B)  10 bis 60 Gewichtsteilen Hydroxylverbindung
        mit einem mittleren Molekulargewicht unter
        1000 und

    C)  10 bis 40 Gewichtsteilen Aminoplastharz,

    dadurch gekennzeichnet, daß die Hydroxylverbindung
    B ein Umsetzungsprodukt aus mindestens einem Dicarbonsäureanhydrid und mindestens einem 4- bis 6-wertigen Alkohol ist, wobei das Umsetzungsprodukt pro
    Polyolrest 1,0 bis 1,3 Mol Dicarbonsäurereste enthält.

2.  Einbrennlacke nach Anspruch 1 auf Basis von

    60 bis 80 Gewichtsteilen A,
    20 bis 40 Gewichtsteilen B und
    10 bis 40 Gewichtsteilen C.

3.  Einbrennlacke nach Ansprüchen 1 und 2, dadurch gekennzeichnet, daß der Polyester A eine Säurezahl
    von 5 bis 50 besitzt.

Le A 21 315

4. Einbrennlacke nach Ansprüchen 1 - 3, dadurch gekennzeichnet, daß der Polyester A eine Säurezahl von 5 bis 20 besitzt.

5. Einbrennlacke nach Ansprüchen 1 - 4, dadurch gekennzeichnet, daß die Hydroxylverbindung B pro Polyolrest 1,0 bis 1,1 Mol Dicarbonsäurereste enthält.

6. Einbrennlacke nach Ansprüchen 1 - 5, dadurch gekennzeichnet, daß die Hydroxylverbindung B ein Phthalsäure-, Maleinsäure-, Bernsteinsäure-, Tetrahydro- und/oder Hexahydrophthalsäurehalbester ist.

7. Einbrennlacke nach Ansprüchen 1 - 6, dadurch gekennzeichnet, daß die Hydroxylverbindung B ein Mannit-, Sorbit- und/oder Pentaerythritester ist.

8. Verfahren zur Herstellung von Einbrennlacken aus

A) 40 bis 90 Gewichtsteilen Polyester mit einer Säurezahl von 1 bis 100, einer Hydroxylzahl von 40 bis 400 und einem mittleren Molekulargewicht von 1500 bis 10 000,

B) 10 bis 60 Gewichtsteilen Hydroxylverbindung mit einem mittleren Molekulargewicht unter 1000 und

C) 10 bis 40 Gewichtsteilen Aminoplastharz,

Le A 21 315

dadurch gekennzeichnet, daß die Hydroxylverbindung B ein Umsetzungsprodukt aus mindestens einem Dicarbonsäureanhydrid und mindestens einem 4- bis 6-wertigen Alkohol ist, wobei das Umsetzungsprodukt pro Polyolrest 1,0 bis 1,3 Mol Dicarbonsäurereste enthält und daß man den Polyester A mit der Hydroxylverbindung B bei einer Temperatur von 110 bis 150°C vereinigt und so lange rührt, bis die gewünschte Viskosität erreicht ist, anschließend neutralisiert und das Aminoplastharz C zusetzt.

Le A 21 315

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| P,A | EP-A-0 062 866  (BAYER) <br> * Patentansprüche 1-6 * <br><br> ----- | 1-8 | C 09 D    3/64 <br> C 08 G   63/12 |

|  |  |
|---|---|
| | RECHERCHIERTE SACHGEBIETE (Int. Cl. ³) <br><br> C 09 D    3/00 <br> C 08 L   67/08 <br> C 09 D    3/00 <br> C 08 L   67/00 <br> C 08 G   63/12 |

Der vorliegende Recherchenbericht wurde für alle Patentansprüche erstellt.

| Recherchenort <br> DEN HAAG | Abschlußdatum der Recherche <br> 28-03-1983 | Prüfer <br> DECOCKER L. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82